# EUROPEAN PATENT APPLICATION

(11) **EP 4 472 103 A2**
(43) Date of publication of application: **04.12.2024**
(21) Application number: 24174994.4
(22) Date of filing: 08.05.2024
(51) Int. Cl.: H04B 7/185

(54) **COORDINATED FREQUENCY SHARING BETWEEN SATELLITE AND TERRESTRIAL RADIO ACCESS NETWORKS**

(30) Priority: 09.05.2023 US 202318195268
(71) Applicant: T-Mobile Innovations LLC, Overland Park, KS 66251 (US)
(72) Inventor: MANSOUR, Nagi A., Arlington, 22207 (US); OZOZLU, Akin, McLean, 22102 (US)
(74) Representative: Suddaby, Mark Edward

(57) **Abstract**

Embodiments of the present disclosure are directed to systems and methods for avoiding or mitigating co-channel interference between terrestrial and satellite radio access networks (RANs). Based on a determination that co-channel interference is occurring between a set of signals communicated with a satellite RAN and a set of signals communicated with a terrestrial base station, one or more co-channel mitigation procedures may be executed. The co-channel mitigation procedures function to limit or eliminate the overlap between the satellite and terrestrial signals on the same frequency band that can negatively affect wireless communication sessions with UEs - particularly for UEs attached to the satellite RAN.

## Description

### SUMMARY

The present disclosure is directed to sharing radio frequency spectrum assets between satellite and terrestrial radio access networks, substantially as shown and/or described in connection with at least one of the Figures, and as set forth more completely in the claims.

According to various aspects of the technology, one or more mitigating procedures are implemented by a base station of a terrestrial radio access network (RAN) based on a determination that the base station is causing co-channel interference with a satellite. Satellites will be increasingly integrated with conventional cellular telecommunication networks. In order to communicate with a wide range of UEs, it is most likely that satellites will be deployed with hardware and software configurations that utilize existing cellular telecommunication frequency bands to communicate with UEs at or near the ground. Particularly when satellites are statically configured to use a single frequency band, co-channel interference can be created by terrestrial base stations using the same band. By implementing mitigation procedures at the terrestrial base stations, where configuration changes are anticipate to be much more manageable, a multi-domain telecommunication system comprising terrestrial and satellite RAN components can provide better overall service for UEs.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

### BRIEF DESCRIPTION OF THE DRAWINGS

Aspects of the present disclosure are described in detail herein with reference to the attached Figures, which are intended to be exemplary and non-limiting, wherein:
Fig. 1 illustrates an exemplary computing device for use with the present disclosure;
Fig. 2 illustrates a diagram of an exemplary environment in which implementations of the present disclosure may be employed; and
Fig. 3 depicts a flow diagram of an exemplary method for mitigating co-channel interference between a satellite and terrestrial base station, in accordance with embodiments described herein.

### DETAILED DESCRIPTION

The subject matter of embodiments of the invention is described with specificity herein to meet statutory requirements. However, the description itself is not intended to limit the scope of this patent. Rather, the inventors have contemplated that the claimed subject matter might be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Various technical terms, acronyms, and shorthand notations are employed to describe, refer to, and/or aid the understanding of certain concepts pertaining to the present disclosure. Unless otherwise noted, said terms should be understood in the manner they would be used by one with ordinary skill in the telecommunication arts. An illustrative resource that defines these terms can be found in Newton's Telecom Dictionary, (e.g., 32d Edition, 2022). As used herein, the term "network access technology (NAT)" is synonymous with wireless communication protocol and is an umbrella term used to refer to the particular technological standard/protocol that governs the communication between a UE and a base station; examples of network access technologies include 3G, 4G, 5G, 6G, 802.11x, and the like.

Embodiments of the technology described herein may be embodied as, among other things, a method, system, or computer-program product. Accordingly, the embodiments may take the form of a hardware embodiment, or an embodiment combining software and hardware. An embodiment takes the form of a computer-program product that includes computer-useable instructions embodied on one or more computer-readable media that may cause one or more computer processing components to perform particular operations or functions.

Computer-readable media include both volatile and nonvolatile media, removable and nonremovable media, and contemplate media readable by a database, a switch, and various other network devices. Network switches, routers, and related components are conventional in nature, as are means of communicating with the same. By way of example, and not limitation, computer-readable media comprise computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, digital versatile discs (DVD), holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

By way of background, the provision of telecommunication services is moving beyond the surface of the earth at increasing speed. Network operators, once exclusively operating terrestrial base stations, will begin to utilize satellite communication systems to provide coverage to areas unserved by terrestrial base stations. Whether because of space launching restrictions on size/weight, the expense of manufacturing a satellite, or for any other reason, it is likely that satellites for integration into a cellular telecommunication network will feature hardware and software configurations with fewer potential configurations than a terrestrial base station. Further, in order to communicate with a broad range of UEs (i.e., to avoid forcing consumer to purchase a new, special purpose UE), satellites for use with cellular networks are anticipated to utilize existing cellular radio frequency spectrum resources. When a satellite uses the same frequency band as a terrestrial base station, the terrestrial base station can cause co-channel interference for UEs attempting to communicate with the satellite, even beyond the usable range (i.e., cell edge) of the terrestrial base station.

In order to prevent or mitigate co-channel interference, the present disclosure is directed to systems and methods for determining when co-channel interference is likely to be occurring between a terrestrial base station and a satellite. Based on a determination that co-channel interference is occurring, one or more co-channel mitigation procedures may be implemented. In aspects where configuration changes to satellites may be difficult or impossible, the one or more mitigation procedures can be implemented at the terrestrial base station. In other aspects, the one or more mitigation procedures could be implemented at the satellite or both the satellite and the terrestrial base station. By changing a frequency, offsetting the timing of signal transmissions, modifying signal transmission characteristics, or implementing spread spectrum coding, changes can be made to reduce or eliminate co-channel interference between the terrestrial and satellite RANs, improving the wireless connection for UEs - particularly those that are wirelessly connected to a distant satellite.

Accordingly, a first aspect of the present disclosure is directed to a system for mitigating co-channel interference of a satellite link. The system comprises a base station of a terrestrial radio access network (RAN) configured to wirelessly communicate a first set of signals to a first coverage area using a first frequency band. The system further comprises one or more computer processing components configured to determine that the base station is causing co-channel interference with a satellite, wherein the satellite is configured to wirelessly communicate a second set of signals to a second coverage area using the first frequency band. The one or more computer processing components are further configured to implement, based on said determination, one or more co-channel interference mitigation procedures at the terrestrial base station.

A second aspect of the present disclosure is directed to a method for mitigating co-channel interference between multi-domain components of one or more radio access networks. The method comprises determining, based on reporting from a UE, that the UE is wirelessly connected to a satellite, wherein the satellite is configured to wirelessly communicate a first set of signals with the UE using a first frequency band. The method further comprises determining, based on a threshold high signal degradation of the first set of signals, that a terrestrial base station is causing co-channel interference by communicating a second set of signals using the first frequency band. The method further comprises implementing one or more co-channel mitigation procedures at the terrestrial base station.

Another aspect of the technology described herein is directed to one or more non-transitory computer readable media that, when executed by one or more computer processing components, cause the one or more computer processing components to perform a method for mitigating co-channel interference between a terrestrial base station and a satellite. The one or more computer processing components are caused to identify an overlapping coverage area of a satellite coverage area and a terrestrial base station coverage area, wherein the satellite communicates a first set of signals to the satellite coverage area and the terrestrial base station communicates a second set of signals to the terrestrial coverage area. The one or more computer processing components are further caused to determine that the satellite RAN is communicating the first set of signals on a first frequency band to the overlapping coverage area and the terrestrial RAN is communicating the second set of signals on the first frequency band to the overlapping coverage area. The one or more computer processing components are further caused to communicate, based on a determination that zero UEs are wirelessly connected to the satellite within a predetermined range of the terrestrial base station, a third set of signals to the terrestrial coverage area using the first frequency from the terrestrial base station

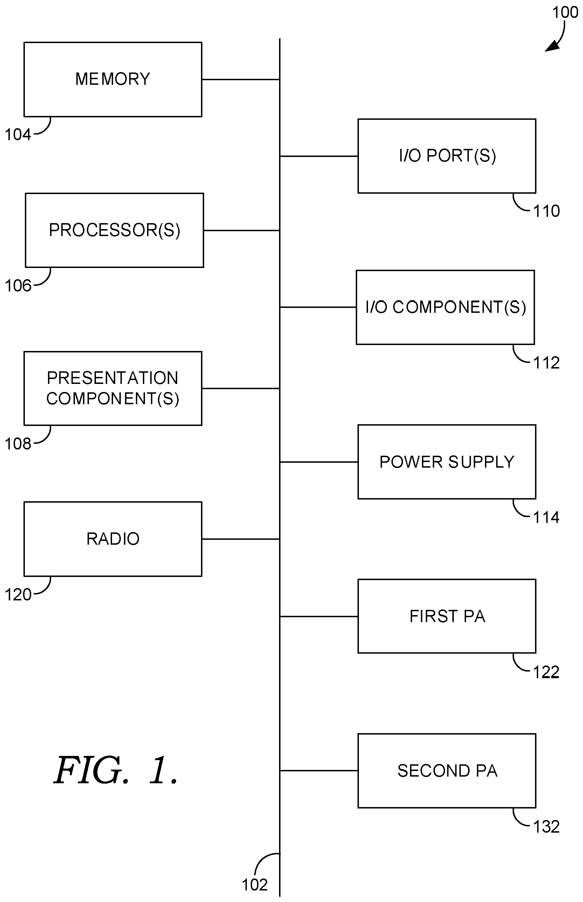

Referring to FIG. 1, an exemplary computer environment is shown and designated generally as computing device 100 that is suitable for use in implementations of the present disclosure. Computing device 100 is but one example of a suitable computing environment and is not intended to suggest any limitation as to the scope of use or functionality of the invention. Neither should computing device 100 be interpreted as having any dependency or requirement relating to any one or combination of components illustrated. In aspects, the computing device 100 is generally defined by its capability to transmit one or more signals to an access point and receive one or more signals from the access point (or some other access point); the computing device 100 may be referred to herein as a user equipment, wireless communication device, or user device, The computing device 100 may take many forms; non-limiting examples of the computing device 100 include a fixed wireless access device, cell phone, tablet, internet of things (IoT) device, smart appliance, automotive or aircraft component, pager, personal electronic device, wearable electronic device, activity tracker, desktop computer, laptop, PC, and the like.

The implementations of the present disclosure may be described in the general context of computer code or machine-useable instructions, including computer-executable instructions such as program components, being executed by a computer or other machine, such as a personal data assistant or other handheld device. Generally, program components, including routines, programs, objects, components, data structures, and the like, refer to code that performs particular tasks or implements particular abstract data types. Implementations of the present disclosure may be practiced in a variety of system configurations, including handheld devices, consumer electronics, general-purpose computers, specialty computing devices, etc. Implementations of the present disclosure may also be practiced in distributed computing environments where tasks are performed by remote-processing devices that are linked through a communications network.

With continued reference to FIG. 1, computing device 100 includes bus 102 that directly or indirectly couples the following devices: memory 104, one or more processors 106, one or more presentation components 108, input/output (I/O) ports 110, I/O components 112, and power supply 114. Bus 102 represents what may be one or more busses (such as an address bus, data bus, or combination thereof). Although the devices of FIG. 1 are shown with lines for the sake of clarity, in reality, delineating various components is not so clear, and metaphorically, the lines would more accurately be grey and fuzzy. For example, one may consider a presentation component such as a display device to be one of I/O components 112. Also, processors, such as one or more processors 106, have memory. The present disclosure hereof recognizes that such is the nature of the art, and reiterates that FIG. 1 is merely illustrative of an exemplary computing environment that can be used in connection with one or more implementations of the present disclosure. Distinction is not made between such categories as "workstation," "server," "laptop," "handheld device," etc., as all are contemplated within the scope of FIG. 1 and refer to "computer" or "computing device."

Computing device 100 typically includes a variety of computer-readable media. Computer-readable media can be any available media that can be accessed by computing device 100 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes RAM, ROM, EEPROM, flash memory or other memory technology, CD-ROM, digital versatile disks (DVD) or other optical disk storage, magnetic cassettes, magnetic tape, magnetic disk storage or other magnetic storage devices. Computer storage media does not comprise a propagated data signal.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 104 includes computer-storage media in the form of volatile and/or nonvolatile memory. Memory 104 may be removable, nonremovable, or a combination thereof. Exemplary memory includes solid-state memory, hard drives, optical-disc drives, etc. Computing device 100 includes one or more processors 106 that read data from various entities such as bus 102, memory 104 or I/O components 112. One or more presentation components 108 presents data indications to a person or other device. Exemplary one or more presentation components 108 include a display device, speaker, printing component, vibrating component, etc. I/O ports 110 allow computing device 100 to be logically coupled to other devices including I/O components 112, some of which may be built in computing device 100. Illustrative I/O components 112 include a microphone, joystick, game pad, satellite dish, scanner, printer, wireless device, etc.

A first radio 120 and second radio 130 represent radios that facilitate communication with one or more wireless networks using one or more wireless links. In aspects, the first radio 120 utilizes a first transmitter 122 to communicate with a wireless network on a first wireless link and the second radio 130 utilizes the second transmitter 132 to communicate on a second wireless link. Though two radios are shown, it is expressly conceived that a computing device with a single radio (i.e., the first radio 120 or the second radio 130) could facilitate communication over one or more wireless links with one or more wireless networks via both the first transmitter 122 and the second transmitter 132. Illustrative wireless telecommunications technologies include CDMA, GPRS, TDMA, GSM, and the like. One or both of the first radio 120 and the second radio 130 may carry wireless communication functions or operations using any number of desirable wireless communication protocols, including 802.11 (Wi-Fi), WiMAX, LTE, 3G, 4G, LTE, 5G, NR, VoLTE, or other VoIP communications. In aspects, the first radio 120 and the second radio 130 may be configured to communicate using the same protocol but in other aspects they may be configured to communicate using different protocols. In some embodiments, including those that both radios or both wireless links are configured for communicating using the same protocol, the first radio 120 and the second radio 130 may be configured to communicate on distinct frequencies or frequency bands (e.g., as part of a carrier aggregation scheme). As can be appreciated, in various embodiments, each of the first radio 120 and the second radio 130 can be configured to support multiple technologies and/or multiple frequencies; for example, the first radio 120 may be configured to communicate with a base station according to a cellular communication protocol (e.g., 4G, 5G, 6G, or the like), and the second radio 130 may configured to communicate with one or more other computing devices according to a local area communication protocol (e.g., IEEE 802.11 series, Bluetooth, NFC, z-wave, or the like).

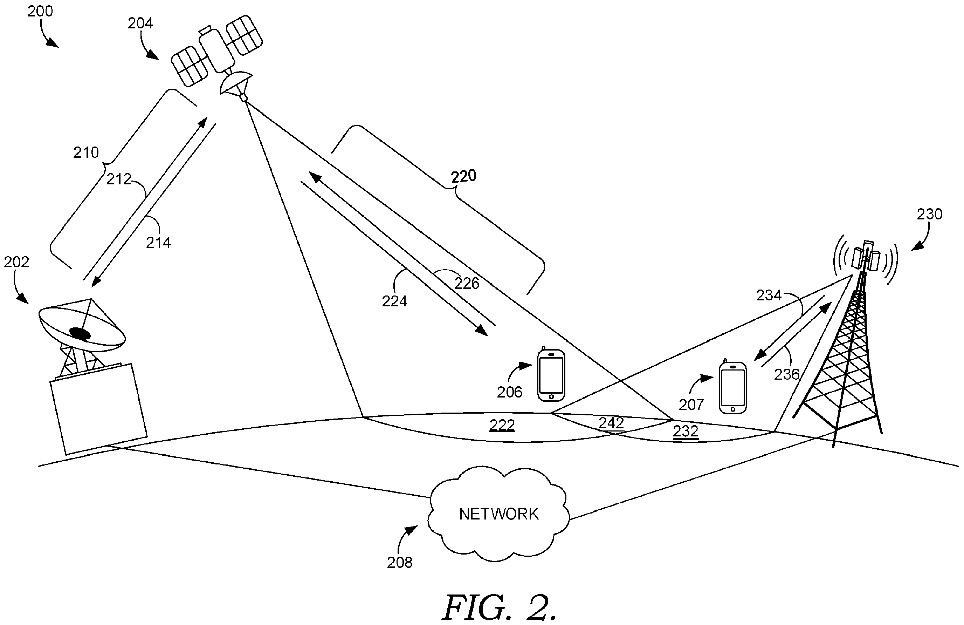

Turning now to Fig. 2, an exemplary network environment is illustrated in which implementations of the present disclosure may be employed. Such a network environment is illustrated and designated generally as network environment 200. At a high level the network environment 200 comprises a gateway 202, a satellite 204 of a satellite radio access network (RAN), at least one UE, a terrestrial base station 230 of a terrestrial RAN, and a network 208. Though the composition of network environment 200 illustrates objects in the singular, it should be understood that more than one of each component is expressly conceived as being within the bounds of the present disclosure; for example, the network environment 200 may comprise multiple gateways, multiple distinct networks, multiple UEs, multiple satellites that communicate with a single gateway, multiple terrestrial base stations, and the like. Similarly, though UEs, such as a first UE206 and a second UE 207 are illustrated as cellular phones, a UE suitable for implementations with the present disclosure may be any computing device having any one or more aspects described with respect to Fig. 1.

The network environment 200 includes a gateway 202 communicatively connected to the network 208 and the satellite 204. The gateway 202 may be connected to the network 208 via one or more wireless or wired connections and is connected to the satellite 204 via a feeder link 210. The gateway 202 may take the form of a device or a system of components configured to communicate with the UE 206 via the satellite 204 and to provide an interface between the network 208 and the satellite 204. Generally, the gateway 202 utilizes one or more antennas to transmit signals to the satellite 204 via a forward uplink 212 and to receive signals from the satellite 204 via a return downlink 214. The gateway 202 may communicate with a plurality of satellites, including the satellite 204. The network 208 comprises any one or more public or private networks, any one or more of which may be configured as a satellite network, a publicly switched telephony network (PSTN), or a cellular telecommunications network. In aspects, the network 208 may comprise a satellite network connecting a plurality of gateways (including the gateway 202) to other networks, a cellular core network (e.g., a 4G, 5G, of 6G core network, an IMS network, and the like), and a data network. In such aspects, each of the satellite network and the cellular core network may be associated with a network identifier such as a public land mobile network (PLMN), a mobile country code, a mobile network code, or the like, wherein the network identifier associated with the satellite network is the same or different than the network identifier associated with the cellular network.

The network environment 200 includes one or more satellites, represented by satellite 204. The satellite 204 is generally configured to relay communications between the gateway 202 and the UE 206. The satellite 204 communicates with the gateway using the feeder link 210 and communicates with the UE 206 using a user link 220. The user link 220 comprises a forward downlink 224 used to communicate signals from the satellite 204 to the UE 206 and a return uplink 226 used to communicate signals from the UE 206 to the satellite 204. The satellite 204 may communicate with the UE 206 using any wireless telecommunication protocol desired by a network operator, including but not limited to 3G, 4G, 5G, 6G, 802.11x and the like. Though shown as having a single beam providing coverage to a satellite coverage area 222, the satellite 204 may be configured to utilize a plurality of individual beams to communicate with multiple different areas at or near the same time. Similarly, though a single forward downlink 224 and a single return uplink 226 are illustrated, the UE 206 may utilize multiple downlinks and/or multiple uplinks to communicate with the satellite 204, using any one or more frequencies as desired by a satellite or network operator.

Generally, the satellite 204 is characterized by its orbit around the earth. The orbit of any particular satellite will vary by operator desire and/or intended use; for example, a satellite suitable for use with the present disclosure may be characterized by its maximum orbital altitude and/or orbital period as Low Earth Orbit (LEO), Medium Earth Orbit (MEO), and High Earth Orbit (HEO). Though not rigidly defined, an LEO satellite may orbit with a maximum orbital altitude of less than approximately 1,250 miles, an MEO satellite may orbit with a maximum orbital altitude generally between 1,250 and 22,000 miles, and an HEO satellite may orbit with a maximum orbital altitude of greater than approximately 22,000 miles. In some, but not all cases, a satellite in HEO may be considered geosynchronous on the basis that its orbital period is approximately equal to the length of a sidereal or solar day (approximately 24 hours); generally, a satellite in geosynchronous orbit will appear to be in the same position relative to a fixed point on the surface of the earth 208 at the same time each day. A geostationary orbit is a special type of geosynchronous orbit with the Earth's equator with each of an eccentricity and inclination equal to zero. Some satellites in HEO and all that are in LEO or MEO have an orbital period that is different than the length of a sidereal/solar day and are considered to be non-geosynchronous and do not remain stationary relative to a fixed position on the surface of the Earth.

The network environment 200 includes one or more terrestrial base stations, represented by terrestrial base station 230. The terrestrial base station 230 is generally configured to relay communications between the network 208 and one or more UEs, such as the second UE 207. The terrestrial base station 230 communicates signals to the UE 206 using a terrestrial downlink 234 and receives signals from the second UE 207 using a terrestrial uplink 236. The terrestrial base station 230 may communicate with the second UE 207 using any wireless telecommunication protocol desired by a network operator, including but not limited to 3G, 4G, 5G, 6G, 802.11x and the like. Though shown as having a single beam providing coverage to a terrestrial coverage area 232, the terrestrial base station 230 may be configured to utilize a plurality of individual beams to communicate with multiple different areas at or near the same time. Similarly, though a single terrestrial downlink 234 and a single terrestrial uplink 236 are illustrated, the second UE 207 may utilize multiple downlinks and/or multiple uplinks to communicate with the terrestrial base station 230, using any one or more frequencies as desired by a mobile network operator.

In aspects of the present disclosure, there may exist an overlapping coverage area 242, wherein the satellite coverage area 222 and the terrestrial coverage area 232 at least partially overlap. In instances where the satellite 204 and the terrestrial base station 230 utilize the same radio frequency spectrum resources, co-channel interference may exist in and/or around the overlapping coverage area 242. Generally, co-channel interference is a type of interference that occurs in telecommunications when two or more transmitters, such as the satellite 204 and the terrestrial base station 230, broadcast on the same frequency channel. The interference can lead to reduced signal quality and even cause a loss of communications for UEs in or near the overlapping coverage area 242. Though illustrated in FIG. 2 as being an overlap of the satellite coverage area 222 and the terrestrial coverage area 232, the overlapping coverage area 242 of the present disclosure is not limited to where intended coverage areas (i.e., cells) overlap, but rather where a threshold high level of co-channel interference occurs.

Determining that a threshold high level of co-channel interference is occurring may be the result of identifying overlapping coverage areas. One or more computer processing components, whether of the network 208, the satellite 204, and/or the terrestrial base statin 230, may determine the approximate coverage areas associated with each radio access network. Such a determination may be based on ideal or planned coverage areas, or modeled based on real world conditions including factors like observed interference, signal transmission power, traffic, and the like. Accordingly, the satellite coverage area 222 and the terrestrial coverage area 232, may be determined to at least partially overlap or that an edge of the satellite coverage area 222 is within a predetermined threshold distance of an edge of the terrestrial coverage area 232. Based on said determination and on a determination by one or more networked computer processing components that a frequency used by the satellite 204 is the same or sufficiently proximate to a frequency used by the terrestrial base station 230, it may be determined that a co-channel interference condition exists.

Determining that a threshold high level of co-channel interference is occurring may be the result of a UE reporting signal degradation and attributing the degradation to co-channel interference. A UE, such as the first UE 206, may report to the network 208 one or more key performance indicators (KPIs) that can be used to identify a threshold high signal degradation. A mobile network operator may use any one or more KPIs alone or in combination. In a first aspect, a sufficiently triggering signal degradation may be the result of the first UE 206 reporting a signal to interference noise ratio (SINR) less than a predetermined threshold (e.g., 0, 1, 3, or 5 dB) or a reference signal receive quality (RSRQ) lower than a predetermined threshold (e.g., -15, -18, or - 20 dB). In other aspects, a sufficiently triggering signal degradation may be the result of the first UE 206 reporting a threshold high change to a KPI, such as if the RSRQ or SINR decreases by a threshold amount (e.g., 3 dB). Once a threshold high signal degradation is observed, one or more networked computer processing components of the terrestrial base station 230 and/or the network 208 may receive an indication from the first UE 206 that the first UE 206 is wirelessly connected to the satellite 204 and that the terrestrial base station 230 is observed to be a neighboring base station. Though the signals from the terrestrial base station 230 may be of insufficient strength to cause a handoff from the satellite 204, the signal degradation reported from the first UE 206 may be attributed to co-channel interference if said one or more networked computer processing components determine (or the first UE 206 reports) that a frequency used by the satellite 204 to communicate with the first UE 206 is the same as (or within a predetermined range of) a frequency that is actively being used by the terrestrial base station 230. For example, the first UE 206 may be wirelessly connected to the satellite 204 and report to the satellite 204 an RSRQ of -20 dB (wherein an operator-set triggering threshold is -17 dB) and an observation of the terrestrial base station 230 is a neighboring base station; based on said reports, one or more networked computer processing components of the network 208 may then determine that the satellite 204 is using the 1900 MHz frequency band to communicate with the first UE 206 and that the terrestrial base station 230 is also actively using the 1900 MHz frequency band to communicates with UEs with the terrestrial coverage areas 232.

In aspects, particularly where a UE is not actively connected to the satellite 204, a determination of co-channel interference between the satellite 204 and the terrestrial base station 230 may be made without observing degradation of a radio link. For UEs, such as the second UE 207, that are wirelessly connected to the terrestrial base station 230, a determination of co-channel interference may be based on a report from the second UE 207 that it is connected to the terrestrial base station 230 and that the satellite 204 is observed as a neighboring base station. Without any indication of degradation of the terrestrial downlink 234 or the terrestrial uplink 236, one or more networked computer processing components of the terrestrial base station 230 and/or the network 208 may determine that the satellite 204 and the terrestrial base station 230 are using the same (or within a predetermined range) frequency to communicate in the downlink.

Based on a determination that co-channel interference exists between the terrestrial base station 230 and the satellite, one or more mitigating procedures may be implemented. In aspects, the one or more mitigating procedures described herein may be implemented at the terrestrial base station 230, particularly when a configuration of the satellite 204 is difficult (or impossible) to modify. The one or more mitigation procedures may ceasing or reducing the power of signal transmissions, modifying the offending frequency at the terrestrial base station 230 that has been determined to cause co-channel interference, implementing timing offsets at the terrestrial base station 230, and implementation of spread spectrum coding at the terrestrial base station 230 and/or satellite 204.

The one or more mitigating procedures may comprise shutting down, deactivating, or otherwise suspending the transmission/use of the satellite 204 or the terrestrial base station 230. Such an action may be done based on a determination that either the satellite 204 or the terrestrial base station has a threshold low utilization. For example, it may be determined that the terrestrial base station 230 has below a threshold utilization rate or below a threshold number of connected users; based on said determination, the terrestrial base station 230 may be instructed to not transmit any signals for a predetermined period of time. Such a mitigating action may be particularly helpful where the both the satellite 204 and terrestrial base station 230 utilize a common frequency and neither has the ability to implement other mitigating procedures. Alternative to ceasing signal transmission for a time, the satellite 204 or the terrestrial base station 230 may be instructed to reduce their signal transmission power, causing their associate coverage area to be reduced and reducing or eliminating the overlapping coverage area 242. In yet other aspects, the terrestrial base station 230 may be permitted to continue transmitting/receiving signals on the frequency band subject to co-channel interference with the satellite 204 based on a determination that a threshold low number, or zero, UEs are wirelessly attached to the satellite 204 within a predetermined distance of the terrestrial base station 230. In other aspects, the terrestrial base station 230 may be instructed to implement one or more mitigation procedures discussed herein based at least in part on a determination that a greater than predetermined threshold number of UEs are wirelessly connected to the satellite within the predetermined range of the terrestrial base station.

The one or more mitigating procedures may comprise modifying the offending frequency, at either the satellite 204 or the terrestrial base station, which has been determined to cause co-channel interference. If, for example, the satellite 204 is configured to communicate only on a first frequency band (e.g., 1900 MHz band) and the terrestrial base station 230 is configured to communicate at a set of frequencies comprising the first frequency band and a second frequency band (e.g., 2500 MHz band), then the terrestrial base station 230 may be instructed to modify its channel usage from the first frequency band to the second frequency band. In aspects, if the terrestrial base station is already actively using the non-conflicting second frequency band and no spread spectrum coding is utilized, the switch from the offloading of traffic previously served on the first frequency band to the second frequency band may be implemented by way of applying orthogonal spread spectrum coding to the second frequency band (increasing the use of the second frequency band without increasing interference on the second frequency band).

The one or more mitigating procedures may comprise timing offsets. In order to mitigate co-channel interference, one or more of the satellite 204 and the terrestrial base station 230 may have the timing of signaling offset in order that signals are not communicated by both the satellite 204 and the terrestrial base station 230 to the overlapping coverage area 242 at the same time and on the same frequency. For example, one or more networked computer processing components of the network 208 or the terrestrial base station 230 may determine that the satellite 204 is configured to transmit signals to the second UE 206 during a first time period, receive signals from the first UE during a second time period, and that the satellite 204 is not transmitting/receiving signals during a third time period. Accordingly, the terrestrial base station may be permitted to continue communicating using a shared radio frequency resource, without other mitigating procedures, as a result of being instructed to only transmit (and instructing connected UEs to transmit) on the conflicting frequency only during the third time period.

The one or more mitigating procedures may comprise implementing a spread spectrum code to signals transmitted/received by one or more of the satellite 204 and the terrestrial base station 230. In a first aspect, co-channel interference may be mitigated by implementing a spread spectrum code paradigm at either the satellite 204 or the terrestrial base station 230. In another aspect, co-channel interference may be mitigated by implementing a first spread spectrum code at the satellite 204 and a second spread spectrum code at the terrestrial base station 230, wherein the first spread spectrum code is different than the second spread spectrum code.

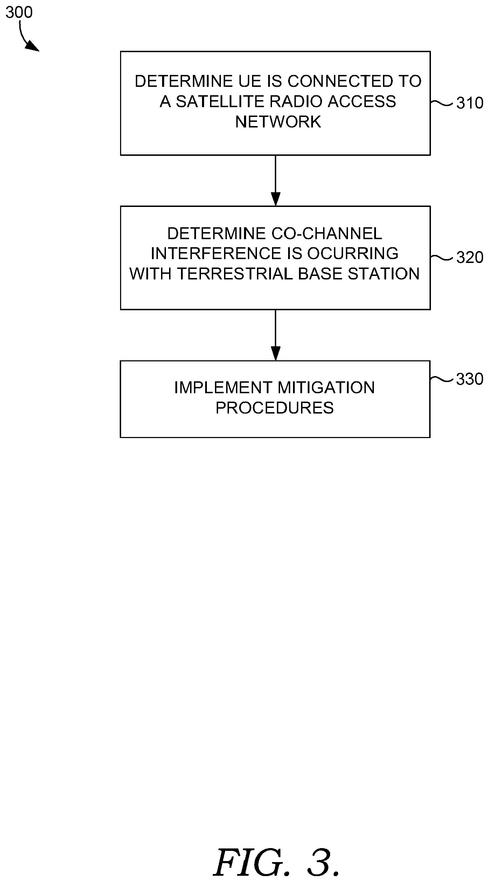

Turning now to Fig. 3, a flow chart representing a method 300 is provided. At a first step 310, it is determined that a UE, such as the first UE 206 of Fig. 2, is wirelessly connected to a satellite, such as the satellite 204 of Fig. 2, and that the satellite is configured to wirelessly communicate a first set of signals with the UE using a first frequency band. At a second step 320, it is determined that a terrestrial base station is causing co-channel interference by communicating a second set of signals using the first frequency band, based at least in part on a threshold high signal degradation of the first set of signals, according to any one or more aspects described with respect to Fig. 2. At a third step 330, one or more co-channel mitigation procedures are implemented, according to any one or more aspects described with respect to Fig. 2.

Many different arrangements of the various components depicted, as well as components not shown, are possible without departing from the scope of the claims below. Embodiments in this disclosure are described with the intent to be illustrative rather than restrictive. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims

In the preceding detailed description, reference is made to the accompanying drawings which form a part hereof wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the preceding detailed description is not to be taken in the limiting sense, and the scope of embodiments is defined by the appended claims and their equivalents.

## Claims

1. A system for mitigating co-channel interference of a satellite link, the system comprising:
a base station of a terrestrial radio access network (RAN) configured to wirelessly communicate a first set of signals to a first coverage area using a first frequency band; and
one or more computer processing components configured to perform operations comprising:
determining that the base station is causing co-channel interference with a satellite, wherein the satellite is configured to wirelessly communicate a second set of signals to a second coverage area using the first frequency band; and
based on said determination, implementing one or more co-channel interference mitigation procedures at the terrestrial base station.

2. The system of claim 1, wherein the one or more co-channel interference mitigation procedures comprises communicating, based on a determination that less than a predetermined threshold number of UEs are wirelessly connected to the satellite within a predetermined range of the base station, a third set of signals to the first coverage area using the first frequency band.

3. The system of claim 1, wherein the one or more co-channel interference mitigation procedures comprises communicating an instruction to the base station to communicate a third set of signals to the first coverage area using a second frequency band, the second frequency band being different than the first frequency band.

4. The system of claim 1, wherein the one or more co-channel interference mitigation procedures comprises:
determining that the satellite is communicating the second set of signals to the second coverage area during a first time period and is not communicating to the second coverage area during a second time period; and
instructing the base station to communicate a third set of signals using the first frequency band during the second time period.

5. The system of claim 1, wherein the one or more co-channel interference mitigation procedures comprises reducing an amount of power used by the base station to transmit the first set of signals from a first transmission power to a second transmission power, the second transmission power being less than the first transmission power, and wherein transmitting the first set of signals using the second transmission power reduces a size of the first coverage area.

6. The system of claim 1, wherein the one or more co-channel interference mitigation procedures comprises communicating the first set of signals to the first coverage area with a first spread spectrum code and communicating an instruction to the satellite to communicate the second set of signals to the second coverage area with a second spread spectrum code, the first spread spectrum code being orthogonal to the second spread spectrum code.

7. The system of claim 1, wherein determining that the base station is causing co-channel interference with a satellite is based at least in part on:
a report from a UE in the second coverage area that one or more KPIs of the second set of signals has degraded beyond a predetermined threshold; or
a report from a UE in the second coverage area that one or more KPIs of the second set of signals has degraded from a first value to a second value, wherein a difference between the first value and the second value exceeds a predetermined threshold.

8. The system of claim 7, wherein the one or more KPIs comprises a reference signal receive quality, RSRQ, or a signal to interference noise ratio, SINR.

9. The system of claim 1, wherein determining that the base station is causing co-channel interference with a satellite is based at least in part on:
determining an overlapping coverage area created by the first coverage area and the second coverage area; or
a report from a UE that it is wirelessly connected to the satellite and that the UE is observing the base station as a neighboring base station.

10. A method for mitigating co-channel interference between multi-domain components of one or more radio access networks comprising:
determining, based on reporting from a UE, that the UE is wirelessly connected to a satellite, wherein the satellite is configured to wirelessly communicate a first set of signals with the UE using a first frequency band;
determining, based on a threshold high signal degradation of the first set of signals, that a terrestrial base station is causing co-channel interference by communicating a second set of signals using the first frequency band; and
implementing one or more co-channel mitigation procedures at the terrestrial base station.

11. The method of claim 10, wherein the one or more co-channel mitigation procedures comprises instructing the terrestrial base station to communicate the second set of signals using a second frequency band, the first frequency band being different than the second frequency band.

12. The method of claim 11, wherein the threshold high signal degradation of the first set of signals comprises:
an indication from the UE that one or more KPIs have degraded below a predetermined threshold, and wherein the one or more KPIs comprise a reference signal receive quality, RSRQ, and a signal to interference noise ratio, SINR; or
an indication from the UE that one or more KPIs have degraded from a first value to a second value, the difference between the first value and the second value being greater than a predetermined delta threshold, and wherein the one or more KPIs comprise a reference signal receive quality, RSRQ, and a signal to interference noise ratio, SINR.

13. One or more non-transitory computer readable media that, when executed by one or more computer processing components, cause the one or more computer processing components to perform a method for mitigating co-channel interference between a terrestrial base station and a satellite comprising:
identifying an overlapping coverage area of a satellite coverage area and a terrestrial base station coverage area, wherein the satellite communicates a first set of signals to the satellite coverage area and the terrestrial base station communicates a second set of signals to the terrestrial coverage area;
determining that the satellite RAN is communicating the first set of signals on a first frequency band to the overlapping coverage area and the terrestrial RAN is communicating the second set of signals on the first frequency band to the overlapping coverage area; and
communicating, based on a determination that zero UEs are wirelessly connected to the satellite within a predetermined range of the terrestrial base station, a third set of signals to the terrestrial coverage area using the first frequency from the terrestrial base station.

14. The non-transitory computer readable media of claim 13, wherein the predetermined range comprises a portion of the satellite coverage area that extends beyond the overlapping coverage area.

15. The non-transitory computer readable media of claim 13, wherein the method further comprises communicating, based on a determination that a greater than predetermined threshold number of UEs are wirelessly connected to the satellite within the predetermined range of the terrestrial base station, the third set of signals to the terrestrial coverage area from the terrestrial base station.
